# EUROPÄISCHE PATENTANMELDUNG

(11) **EP 4 349 681 A2**
(43) Veröffentlichungstag der Anmeldung: **10.04.2024**
(21) Anmeldenummer: 23198215.8
(22) Anmeldetag: 19.09.2023
(51) Int. Cl.: B61C 3/00, B61D 17/12, B60L 5/00

(54) **MITTELFÜHRERHAUSLOKOMOTIVE MIT EINEM FÜHRERHAUS UND MEHREREN AUF DEM FÜHRERHAUS ANGEORDNETEN ELEKTRISCHEN DACHAUFBAUTEN**

(30) Priorität: 19.09.2022 DE 102022123965
(71) Anmelder: Vossloh Rolling Stock GmbH, 24107 Kiel (DE)
(72) Erfinder: SCHELSKE, Peter, 18195 Cammin (DE); KOHLEY,Stephan, 24159 Kiel (DE)
(74) Vertreter: Bittner, Thomas L.

(57) **Zusammenfassung**

Bei einer Mittelführerhauslokomotive (1) mit einem Führerhaus (3) und mehreren auf dem Führerhaus (3) angeordneten elektrischen Dachaufbauten (5), ist vorgesehen, dass an dem Führerhaus (3) wenigstens zwei Schutzblenden (6) zum Abschirmen von Personen im Führerhaus (3) gegenüber Elektromagnetismus von den elektrischen Dachaufbauten (5) angeordnet sind, und wobei die elektrischen Dachaufbauten (5) zwischen den wenigstens zwei Schutzblenden (6) angeordnet sind. (Fig. 5)

## Beschreibung

Die Erfindung betrifft eine Mittelführerhauslokomotive mit einem Führerhaus und mehreren auf dem Führerhaus angeordneten elektrischen Dachaufbauten.

### Hintergrund

DE 10 2010 035 903 A1 betrifft eine als Mittelführerhauslokomotive realisierte Rangierlokomotive, bei der in Längsrichtung am Führerhaus angrenzende Bauräume zur Aufnahme von Betriebsmodulen vorgesehen sind. Das schmale Führerhaus bietet auf seinem Dach nur wenig Raum für Dachaufbauten und Vorrichtungen zum Schutz des Lokführers vor Hochspannung und elektromagnetischen Feldern, Wellen und Strahlen. Gleichzeitig werden zur Verwendung in unterschiedlichen Regionen unterschiedlich normierte Antennensysteme benötigt, die entweder viel Raum benötigen oder aufwendig umzurüsten sind.

### Zusammenfassung

Es ist eine Aufgabe der Erfindung, die Nachteile des Stands der Technik zu überwinden und insbesondere eine Mittelführerhauslokomotive mit einem verbesserten Führerhaus bereitzustellen.

Diese Aufgabe wird gelöst durch die Gegenstände der unabhängigen Ansprüche.

Erfindungsgemäß ist eine Mittelführerhauslokomotive vorgesehen, die ein Führerhaus aufweist sowie mehrere auf dem Führerhaus angeordnete elektrische Dachaufbauten.

Gemäß einem ersten Aspekt der Erfindung sind an dem Führerhaus wenigstens zwei Schutzblenden zum Abschirmen von Personen im Führerhaus gegenüber Elektromagnetismus von den elektrischen Dachaufbauten angeordnet. Die elektrischen Dachaufbauten sind, insbesondere in Querrichtung, zwischen den wenigstens zwei Schutzblenden angeordnet. Vorzugsweise sind zwei, drei, vier oder mehr, insbesondere alle, elektrische Dachaufbauten, zwischen den wenigstens zwei Schutzblenden angeordnet. Die Schutzblende umfasst vorzugsweise einen flächigen Blendenabschnitt. Der Blendenabschnitt kann vollflächig, beispielsweise als Blech, oder mit Ausnehmungen, beispielsweise als Lochblech oder Gitter, realisiert sein. Vorzugsweise umfasst der Blendenabschnitt der Schutzblende ein elektrisch leitfähiges Material oder besteht daraus.

Bei einer bevorzugten Ausführung einer Mittelführerhauslokomotive erstrecken sich die wenigstens zwei Schutzblenden in der Längsrichtung relativ zur Vertikalrichtung mit einer in der in Querrichtung orientierten Neigung. Insbesondere beträgt die Neigung mindestens 15°, vorzugsweise mindestens 30° oder wenigstens 40°. Insbesondere beträgt die Neigung höchstens 75%, vorzugsweise 60° oder höchstens 50°. Die Neigung kann vorzugsweise durch die flächige, ebene Erstreckung eines Blendenabschnitts definiert sein. Vorzugsweise sind die Schutzblenden entlang ihrer Erstreckung in der Längsrichtung mit einer konstanten Neigung in der Querrichtung relativ zur Vertikalrichtung ausgebildet. Vorzugsweise sind die Schutzblenden in Relation zu einer äußeren Seitenwand des Führerhauses in Querrichtung nach innen geneigt. Die wenigstens zwei Schutzblenden umfassen vorzugsweise wenigstens eine rechte Schutzblende und eine linke Schutzblende, die in der Querrichtung aufeinander zu geneigt sind. Die geneigten Schutzblenden bedecken vorzugsweise in der Querrichtung eine Überdeckungsfläche des im Wesentlichen horizontalen Dachs des Führerhauses. Durch die Neigung kann eine besonders effektive Abschirmung der elektromagnetischen Emissionen der elektrischen Dachaufbauten erreicht werden.

Gemäß einer Ausführung einer Mittelführerhauslokomotive sind die zwei Schutzblenden in der Querrichtung gegenüberliegend angeordnet. Vorzugsweise sind die wenigstens zwei Schutzblenden an in der Querrichtung gegenüberliegenden, oberen Längsrandkanten des Führerhauses angeordnet. Vorzugsweise erstreckt sich eine Schutzblende entlang zumindest einer Hälfte, insbesondere zumindest Dreiviertel, vorzugsweise entlang der vollständigen Längserstreckung, der ihr zugeordneten Längsrandkante. Es kann bevorzugt sein, dass die Schutzblende eine untere Randkante aufweist, die angrenzend zur Längsrandkante angeordnet ist. Zwischen der Längsrandkante und der unteren Randkante ist vorzugsweise ein Vertikalabstand vorgesehen, der beispielsweise als ein Luftspalt gebildet oder mit einem Isolationskörper belegt sein kann. Vorzugsweise beträgt der Abstand zwischen der unteren Randkante der Schutzblende und der Längsrandkante des Führerhauses weniger als 10 cm, vorzugweise weniger als 5 cm, insbesondere weniger als 1 cm.

Gemäß einer Ausführung umfasst wenigstens eine Schutzblende einen, insbesondere an ihrem in Vertikalrichtung oberen Ende, angeordneten Antennenträger. Der Antennenträger kann eine flächige Ausdehnung aufweisen. Beispielweise kann der Antennenträger als im Wesentlichen ebene, horizontale Tragplatte gebildet sein. Insbesondere kann sich die Tragplatte im Wesentlichen senkrecht in Relation zur Vertikalrichtung in der Querrichtung erstrecken. Vorzugsweise erstreckt sich der Antennenträger ausgehend von der Schutzblende in Querrichtung nach innen. Der Antennenträger, insbesondere die Tragplatte, kann in Bauteileinheit mit einer Schutzblende, insbesondere einem Blendenabschnitt, beispielsweise aus einem einzelnen Blech, gebildet sein. Alternativ ist es denkbar, dass der Antennenträger an der Schutzblende befestigt, beispielsweise verschraubt, verschweißt oder angesteckt, ist.

Bei einer besonders bevorzugten Ausführung einer Mittelführerhauslokomotive ist an dem Führerhaus, insbesondere am Dach des Führerhauses, wenigstens eine Montagestruktur zum Tragen der wenigstens einen Schutzblende und/oder wenigstens eines Antennenträgers angeordnet. Insbesondere umfasst die Montagestruktur eine Schienenstruktur, an der die wenigstens eine Schutzblende, insbesondere umfassend einen Antennenträger, lösbar befestigt ist. Insbesondere sind an der Montagestruktur mehrere in der Längsrichtung versetzte Schutzblenden angeordnet. Beispielsweise kann eine (rechte) Schutzblende mehrere einzeln montierbare Schutzblendenteile umfassen, die in der Längsrichtung versetzt, insbesondere unmittelbar aneinander angrenzend, an der Montagestruktur angeordnet sind. Durch die Verwendung der Montagestruktur wird es ermöglicht, eine unmittelbare Befestigung von Schutzblenden an dem Führerhaus zu vermeiden, sodass einzelne Schutzblenden oder Schutzblendenteile einfacher und präziser montierbar und zu Wartungs- oder Reparaturzwecken abnehmbar sind.

Gemäß einer Weiterbildung einer Mittelführerhauslokomotive erstreckt sich die Schienenstruktur in der Längsrichtung entlang der Führerhauslänge. Wenigstens eine Schutzblende kann an oder in der Schienenstruktur in einem Vormontagezustand in der Längsrichtung beweglich geführt sein. Vorzugsweise sind Befestigungsmittel vorgesehen, die dazu ausgelegt sind, in einem Vormontagezustand eine lose Halterung der Schutzblende und/oder gegebenenfalls Dachaufbauten, an der Montagestruktur zu gewährleisten, und die dazu ausgelegt sind, in einem Montagezustand die Schutzblende und/oder gegebenenfalls Dachaufbauten ortsfest an der Montagestruktur zu halten. Es ist denkbar, dass in der Längsrichtung, vorzugsweise unmittelbar, nebeneinander angeordnete oder anzuordnende Schutzblendenteile, gegebenenfalls mit elektrischen Dachaufbauten, insbesondere Antennenträger, an derselben Montagestruktur gehalten sind. Die rechte oder linke Schutzblende, welche aus verschiedenen Schutzblendenteilen gebildet sein kann, und/oder elektrische Dachaufbauten, können einfach durch sukzessives Einschieben in die Schienenstruktur an dem Führerhaus montierbar gestaltet sein.

Gemäß einem zweiten Aspekt der Erfindung, der mit dem ersten und dessen Ausführungen und Weiterbildungen kombinierbar ist, ist an dem Führerhaus wenigstens eine Montagestruktur zum Tragen von elektrischen Dachaufbauten, insbesondere Antennenträgern, an der wenigstens ein elektrischer Dachaufbau lösbar befestigt ist. Der Antennenträger kann eine flächige Ausdehnung aufweisen. Beispielweise kann der Antennenträger als im Wesentlichen ebene, horizontale Tragplatte gebildet sein. Insbesondere kann sich die Tragplatte im Wesentlichen senkrecht in Relation zur Vertikalrichtung in der Querrichtung erstrecken. Durch die Verwendung der Montagestruktur wird es ermöglicht, eine unmittelbare Befestigung von Dachaufbauten an dem Führerhaus zu vermeiden, sodass einzelne Dachaufbauten einfacher und präziser montierbar und zu Wartungs- oder Reparaturzwecken abnehmbar sind. Ferner können Antennenträger und davon getragene Antennen rasch an unterschiedliche regionale Anforderungen angepasst werden.

Bei einer Kombination des ersten und des zweiten Aspekts der Erfindung kann es vorgesehen sein, dass der wenigstens eine elektrische Dachaufbau und die Schutzblenden dieselbe Montagestruktur oder individuell unterschiedliche Montagestrukturen aufweisen. Die Montagestruktur zum Tragen von elektrischen Dachaufbauten kann einheitlich zu oder Funktionsunion mit der Montagestruktur zum Tragen der wenigstens eine Schutzblende ausgeführt sein. Es kann bevorzugt sein, dass an der Montagestruktur mehrere in der Längsrichtung versetzte Dachaufbauten, insbesondere Antennenträger, lösbar befestigt sind. Zusätzlich oder alternativ kann es vorgesehen sein, dass an der Montagestruktur mehrere in der Längsrichtung versetzte Schutzblenden angeordnet sind.

Bei einer Ausführung des zweiten Aspekts der Erfindung umfasst die Montagestruktur eine Schienenstruktur, an der wenigstens ein elektrischer Dachaufbau, insbesondere umfassend einen Antennenträger, lösbar befestigt ist. Vorzugsweise verwenden Dachaufbauten und Schutzblenden die gleiche Schienenstruktur. Die Schienenstruktur der Montagestruktur kann eingleisig oder mehrgleisig realisiert sein, vorzugsweise zweigleisig. Die mehreren Gleise der Schienenstruktur sind vorzugsweise parallel zueinander ausgerichtet und vorzugsweise gleichartig dimensioniert.

Gemäß einer Weiterbildung des zweiten Aspekts der Erfindung erstreckt sich die Schienenstruktur in der Längsrichtung entlang der Führerhauslänge. Der wenigstens eine Dachaufbau ist in einem Vormontagezustand in der Längsrichtung beweglich an oder in der Schienenstruktur geführt.

Bei einer Montagestruktur, die eine Schienenstruktur umfasst, kann es vorgesehen sein, dass sich die Schiene oder Schienen der Montagestruktur in der Längsrichtung über einen Teil oder im Wesentlichen vollständig über die Längserstreckung des Führerhauses ausdehnen.

Vorzugsweise umfasst der wenigstens eine elektrische Dachaufbau der Mittelführerhauslokomotive eine Antenne oder mehrere Antennen. Die Antenne kann beispielsweise eine GSMR-Antenne, eine Antenne zur Funkfernsteuerung, eine Antenne zur Diagnose, eine Zugfunkantenne, eine Zugsicherungsantenne und/oder eine Stromverbrauchsmessantenne sein. Es ist denkbar, dass eine Antenne in Funktionsunion unterschiedliche Daten oder Signale, beispielsweise Zugfunk und Diagnoseinformationen, überträgt. Es kann bevorzugt sein, dass die Dachaufbauten redundante Antennen umfassen. Der Fahrer und eventuelle Passagiere der Mittelführerhauslokomotive werden durch die Schutzblenden vor den elektromagnetischen Emissionen der Antennen abgeschirmt.

Bei einer bevorzugten Ausführung einer Mittelführerhauslokomotive umfasst der wenigstens eine elektrische Dachaufbau einen Stromabnehmer, insbesondere mit einem Pantografen. Der Stromabnehmer ist dazu ausgelegt, elektrische Leistung zur Versorgung der Mittelführerhauslokomotive aus einer Oberleitung ab zu greifen. Der Stromabnehmer kann zwischen einer aktiven Kontaktstellung und einer passiven Raststellung beweglich sein. Die Raststellung kann beispielsweise eine am Dach des Führerhauses anliegende oder nahe am Dach angeordnete Stellung des Stromabnehmers sein. In der aktiven Kontaktstellung ist der Stromabnehmer entfernt von der Mittelführerhauslokomotive, insbesondere dem Dach des Führerhauses, angeordnet, um in einen Berührkontakt mit einer Oberleitung gebracht oder bringbar zu sein. Der Stromabnehmer umfasst vorzugsweise einen Pantografen oder eine andere Kinematik zum Bewegen des Stromabnehmers zwischen der aktiven und der passiven Stellung sowie vorzugsweise zum Halten des Stromabnehmers in der passiven oder aktiven Stellung. Alternativ oder zusätzlich umfasst der wenigstens eine elektrische Dachaufbau einen Hauptschalter. Der Hauptschalter ist vorzugweise dazu ausgelegt und eingerichtet, eine elektrische Verbindung zwischen einerseits dem Stromabnehmer und andererseits einem Bord-Stromnetz der Mittelführerhauslokomotive zu öffnen und/oder schließen. Der Hauptschalter und/oder der Stromabnehmer sind vorzugsweise zur Übertragung von Hochspannung ausgelegt und eingerichtet. Am Stromabnehmer wie auch am Hauptschalter können starke elektromagnetische Felder und Lichtbögen auftreten, von denen die Bordelektronik, der Fahrer und eventuelle Passagiere der Mittelführerhauslokomotive durch die Schutzblenden geschützt sind.

Die Mittelführerhauslokomotive ist ein Schienenfahrzeug, insbesondere eine Rangierlokomotive. Mittelführerhauslokomotiven können dazu ausgelegt sein, wahlweise mit oder ohne Oberleitung betrieben zu werden. Insbesondere können Mittelführerhauslokomotiven für einen betriebsgemäßen Einsatz unabhängig oder frei von einer Oberleitung ausgelegt sein, beispielsweise für den Nebenstreckenbetrieb oder für den Bauzugverkehr. Es kann vorgesehen sein, dass Gehäuse, etwa für einen Umrichter und/oder Versorgungsmodule, vor und/oder hinter dem Führerhaus eine maximale Gehäusehöhe haben, die vorzugsweise auf eine untere Fensterhöhe insbesondere der Unterkante der Fenster des Führerhauses begrenzt ist, um dem Fahrer eine freie Rundumsicht für den Fahrer zu erlauben, und so eine gute Übersicht und Sicherheit im Betrieb zu gewährleisten.

Eine Mittelführerhauslokomotive umfasst im Allgemeinen einen Fahrzeugrahmen und einem in Längsrichtung in etwa mittig auf dem Fahrzeugrahmen angeordneten Führerhaus. Länge des Fahrzeugrahmens kann vorzugsweise größer als 10 Meter, vorzugsweise größer etwa 12 Meter sein. Vorzugsweise korrespondiert die Längsrichtung zur betriebsgemäßen (geradeaus-)Fahrtrichtung der Mittelführerhauslokomotive. Mit Längsrichtung kann im Allgemeinen die Haupterstreckungsrichtung der Mittelführerhauslokomotive bezeichnet werden. Mit Längsrichtung kann im Allgemeinen die bei betriebsgemäßem Gebrauch der Mittelführerhauslokomotive auf einer Schienenstrecke parallel zur Schienenstrecke orientierte Richtung bezeichnet sein. Begriffe wie "vorne", "hinten", etc. sind im Rahmen der vorliegenden Offenbarung im Allgemeine in Relation zu dieser Längsrichtung zu verstehen.

Mit Querrichtung kann im Allgemeinen die bei betriebsgemäßem Gebrauch der Mittelführerhauslokomotive auf einer Schienenstrecke quer zur Schienenstrecke orientierte Richtung bezeichnet sein. Begriffe wie "rechts", "links", etc. sind im Rahmen der vorliegenden Offenbarung im Allgemeine in Relation zu dieser Querrichtung in Bezug auf eine designierte Vorderseite bzw. Vorwärtsrichtung der Lokomotive zu verstehen.

Die Vertikalrichtung bezeichnet im Allgemeinen die bei betriebsgemäßem Gebrauch der Mittelführerhauslokomotive auf einer im Wesentlichen flachen Schienenstrecke, insbesondere auf ebener Schienenfläche, im Sinne der Schwerkraft, senkrecht auf der Schienenstrecke orientierte Richtung. Begriffe wie "oben", "unten", etc. sind im Rahmen der vorliegenden Offenbarung im Allgemeine in Relation zu dieser Vertikalrichtung zu verstehen.

Anders als eine Mittelführerhauslokomotive sind Stirnführerhauslokomotiven, wie in EP 1 926 648 B1 beschrieben, mit zwei an den in Längsrichtung vorderen und hinteren Stirnseiten angeordneten Führerräumen ausgestattet, zwischen denen ein Maschinenraum angeordnet ist, der unterschiedliche Aggregate, wie dieselelektrische Generatoren, Transformatoren für Oberleitungsstrom, Schaltschränke und dergleichen aufnimmt und sich eben so hoch wie oder höher als das Dach der Führerräume erstreckt.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:

### Beschreibung von Ausführungsbeispielen

- Fig. 1: eine Seitenansicht einer erfindungsgemäßen Mittelführerhauslokomotive;
- Fig. 2: eine Draufsicht auf die Mittelführerhauslokomotive gemäß Fig. 1;
- Fig. 3: einen Vertikalschnitt durch das Führerhaus einer Mittelführerhauslokomotive;
- Fig. 4: eine vereinfachte perspektivische Ansicht des Führerhauses einer Mittelführerhauslokomotive; und
- Fig. 5: eine andere perspektivische Ansicht des Führerhauses einer Mittelführerhauslokomotive.

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Eine erfindungsgemäße Mittelführerhauslokomotive ist im Allgemeinen mit dem Bezugszeichen 1 versehen. Im Folgenden wird zur Vereinfachung der Lesbarkeit anstelle des Begriffs "Mittelführerhauslokomotive" die Kurzform "Lokomotive" verwendet, wobei klar sei, dass stets eine Mittelführerhauslokomotive gemeint ist. Eine Lokomotive 1 hat ein Führerhaus 3 für den Lokomotivführer (kurz: Fahrer), welches in Längsrichtung L mittig angeordnet ist (Mittelführerhaus). Zwischen dem Führerhaus 3 und dem vorderen Ende der Lokomotive 1 wie auch zwischen dem Führerhaus 3 und dem hinteren Ende der Lokomotive 1 erstreckt sich ein Abstand von je wenigstens 2 m oder mehr.

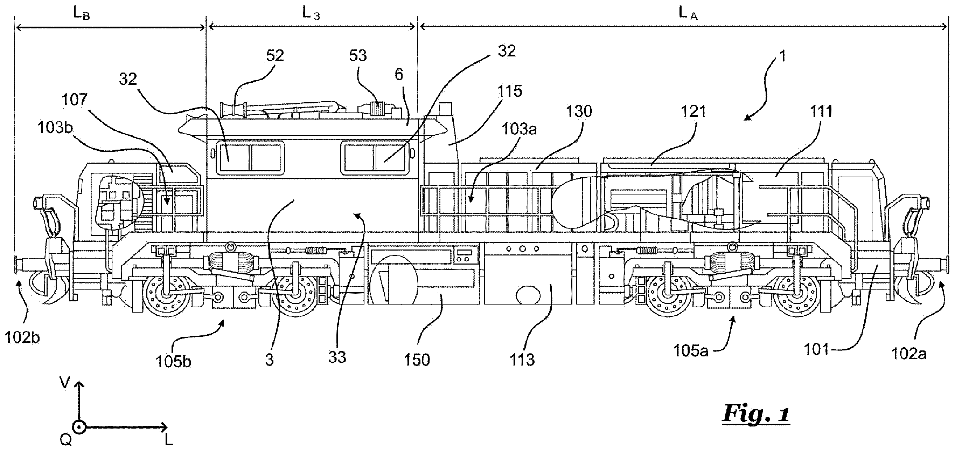

Bei der in Figur 1 abgebildeten exemplarischen Ausführung ist Lokomotivlänge L₁ wesentlich größer als die Führerhauslänge L₃, beispielsweise mehr als 5 m oder mehr als 10 m länger. Die Lokomotivlänge L₁ der Mittelführerhauslokomotive 1 kann 12 m bis 24 m betragen, insbesondere zwischen 15 m und 20 m, vorzugsweise zwischen 18 m und 19 m. Die Führerhauslänge L3 kann zwischen 3,5 m und 6 m, insbesondere zwischen 3,7 m und 4 m betragen. Zwischen dem in der Längsrichtung L ersten Ende, dass hier als vorderes Ende 102a bezeichnet wird, und dem Führerhaus 3 erstreckt sich eine Vorderbau-Länge L_{A} von etwa 9-13 m, insbesondere etwa 10-12 m. Zwischen dem in der Längsrichtung L zweiten Ende, das hier als hinteres Ende 102b bezeichnet wird, und dem Führerhaus 3 erstreckt sich eine HinterbauLänge L_{B} von etwa 1 m bis 5 m, insbesondere etwa 1,5 m bis 3 m. Durch das mit der vergrö-ßerten Führerhauslänge L₃ einhergehende verlängerte Dach 43 kann eine besonders hohe Sicherheit des Lokführers gegenüber Hochspannung am Stromabnehmer 52 oder elektromagnetische Strahlung anderer elektrischer Dachaufbauten 5 gewährleistet werden.

Die Lokomotive 1 umfasst ein massives Rahmengestell 101, auf dem das Führerhaus 3 angeordnet ist. Das Rahmengestell kann auch als Fahrzeugrahmen bezeichnet sein. An dem Rahmengestell 101 vorne und hinten sind Stoßdämpfer 102a, 102b angeordnet. Vorne und hinten weist die Lokomotive 1 je ein um eine vertikale Achse drehbares Fahrgestell 105a, 105b auf. Auf dem Rahmengestell 101 sind mehrere Aufbauten vor und hinter dem Führerhaus 3 angeordnet. Auf dem Rahmengestell 101 ist ein Generatormodul 111 und ein Traktionsbatteriemodul 121 angeordnet, welche Antriebsenergie für in den Fahrgestellen 105a, 105b angeordnet Antriebsmotoren bereitstellen können. Elektrische Antriebsenergie kann vom Generatormodul 111 und/oder dem Traktionsbatteriemodul 121 über einen Umrichter 130 an die Antriebsmotoren bereitgestellt werden.

Das Generatormodul 111 kann als Versorgungsaggregat beispielsweise einen Dieselmotor oder einen mit Gas betriebenen Motor umfassen. In Vertikalrichtung V unterhalb des Rahmengestells 101 ist ein Kraftstofftank 113, beispielsweise Dieselkraftstoff, vorgesehen, um den Generator zu betreiben. Von dem Generatormodul 111 verläuft eine Abgasleitung durch einen Abgasschacht bis zu dem Abgasschornstein 115, der sich in Vertikalrichtung V bis oberhalb des Führerhauses 3 erstreckt. Die (nicht näher dargestellte) Abgasleitung überbrückt den zwischen Führerhaus 3 und Generatormodul 111 angeordneten Umrichter 130. Es ist denkbar, dass die Lokomotive 1 zwei Generatormodule 111 oder zwei Traktionsbatteriemodule 121 aufweist (nicht abgebildet). Anstelle eines Traktionsbatteriemoduls 121 könnte alternativ beispielsweise ein Wasserstoffspeicher vorgesehen sein.

Auf dem Dach des Führerhauses 3 sind elektrische Dachaufbauten 5 angeordnet. Zur Versorgung der Lokomotive 1 einer Oberleitung kann es zweckmäßig sein, einen Stromabnehmer 52 zum Abgreifen elektrischer Energie von der Oberleitung vorzusehen. Der Stromabnehmer 52 kann mittels eines Pantografen oder dergleichen in der Vertikalrichtung V positionierbar sein. Eine Lokomotive 1 mit Oberleitungs-Stromabnehmer 52 umfasst ferner einen Transformator 150 zum Bereitstellen von elektrischer Antriebsenergie für die Antriebsmotoren. Der Transformator 150 kann unterhalb des Führerhauses 3 angeordnet sein. Bei der in Figur 1 dargestellten Ausführung einer Mittelführerhauslokomotive 1 ist der Transformator 150 in Längsrichtung L mittig unten an dem Rahmengestell 101 befestigt. Der Transformator 150 befindet sich in der Längsrichtung L zwischen den Fahrgestellen 105a und 105b. Es kann zweckmäßig sein, die elektrische Leitung von dem Stromabnehmer 52 zum Transformator 150 im oder angrenzend an den Abgasschornstein 115 zu führen. Zum wahlweisen Trennen oder Verbinden des Stromabnehmers 52 von der Oberleitung ist ein Hauptschalter 53 vorgesehen. Der Stromabnehmer 52 und der Hauptschalter 53 sind optional als Dachaufbauten 5 auf dem Führerhaus 3 angeordnet.

Das Führerhaus 3 ist bei der hier abgebildeten Lokomotive 1 asymmetrisch vom Mittelpunkt des Rahmengestells 101 in der Längsrichtung L nach hinten versetzt angeordnet. Das Führerhaus 3 erstreckt sich oberhalb eines Teils des hinteren Fahrgestells 105b und eines Teils des Transformators 150.

Das Führerhaus 3 hat an seiner Vorderseite und seiner Rückseite je eine Einstiegstür 38, die auf einen Gang 103a, 103b auf dem Rahmengestell 101 führt, der sich in der Längsrichtung L ausdehnt. Der vordere Gang 103a führt in Querrichtung Q seitlich neben den Versorgungsmodulen 111, 121 entlang. Der hintere Gang 103b führt in Querrichtung Q seitlich neben einem Aufbau, der beispielsweise eine Klimaanlage 107 zum Temperieren des Führerhauses 3 umfassen kann, vorbei.

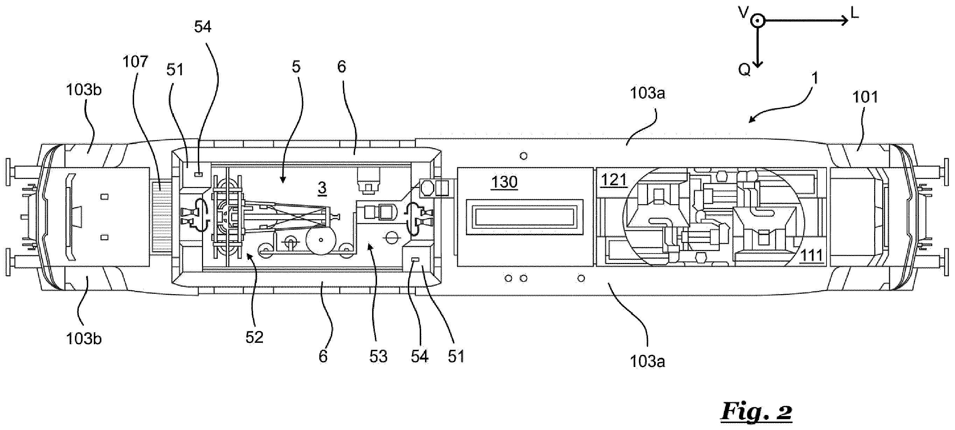

Wie in Figur 2 zu sehen, sind können die auf dem Führerhaus 3 angeordneten elektrischen Dachaufbauten 5 Antennen 54 umfassen. Die Antennen 54 sind auf Antennenträgern 51 angeordnet. Als Antenne 54 kann zum Beispiel eine GSMR-Antenne, eine Antenne zur Funkfernsteuerung, eine Antenne zur Diagnose, eine Zugfunkantenne, eine Zugsicherungsantenne und/oder eine Stromverbrauchsmessantenne vorgesehen sein. Um den Fahrer und andere Personen im Führerhaus 3 vor durch die Dachaufbauten 5 erzeugten elektromagnetischen Feldern, Wellen und/oder Strahlen zu schützen, sind Schutzblenden 6 an der Oberseite des Führerhauses 3 angeordnet. Die Dachaufbauten 5 befinden sich in der Querrichtung Q zwischen diesen Schutzblenden 6. Die Schutzblenden 6 können sich an der Oberseite in der Längsrichtung L im Wesentlichen vollständig entlang der Längsrandkanten des Führerhauses 3 ausdehnen.

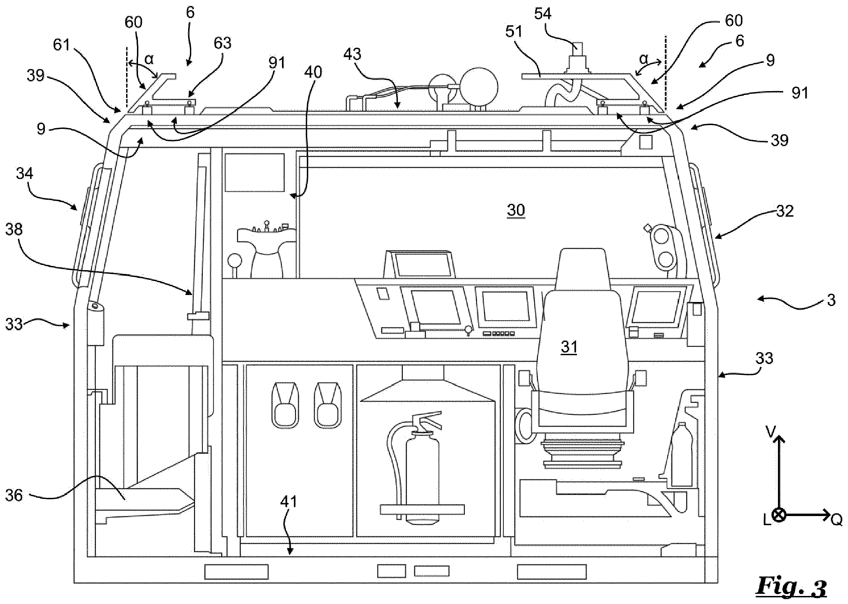

Fig. 3 zeigt einen Vertikalschnitt durch das Führerhaus 3 mit Blickrichtung in Fahrtrichtung nach vorne. Das Führerhaus 3 hat in der Längsrichtung L in Fahrtrichtung vorwärts wie auch Fahrtrichtung rückwärts ausgerichtete Windschutzscheiben 30. Das Führerhaus 3 hat mehrere in seiner Seitenwand 33 ausgebildete Seitenfenster 32, 34. Die Aufbauten auf dem Rahmengestell 101 erstrecken sich in der Vertikalrichtung in etwa auf Höhe der Fensterunterkante der Seitenfenster 32, 34 und/oder der Windschutzscheibe 30, um dem Fahrer eine möglichst ungehinderte Sicht auf die Umgebung zu ermöglichen.

Im Führerhaus 3 ist ein Führerstand 31 angeordnet, an dem ein Lokführer sitzen oder stehen und die Lokomotive 1 steuern kann. Oberhalb des Führerstands 31 ist an der Stirnwand 40 des Führerhauses 3 eine Windschutzscheibe 30 angeordnet. Durch die Windschutzscheibe 30 kann der Lokführer von dem Führerstand 31 aus in der Längsrichtung L aus dem Führerhaus 3 hinaus auf die Gleise und Umgebung schauen. Links neben dem Führerstand 31 ist eine Einstiegstür 38 angeordnet. Durch die Einstiegstür 38 kann der Fahrer das Führerhaus 3 vom Steg 103a, 103b der Lokomotive 1 betreten. In der Längsrichtung L neben der Tür 38 kann ein Stehplatz oder Sitzplatz 36 beispielsweise durch einen Klappsitz bereitgestellt sein.

In der in Figur 3 dargestellten Schnittansicht sind die linke und die rechte Längsrandkante 39 zu erkennen, welche im Übergang zwischen je einer der in Querrichtung Q gegenüberliegenden Seitenwänden 33 und dem Dach 43 des Führerhauses 3 geformt sind. Entlang der Längsrandkanten 39 sind die Schutzblenden 6 angeordnet. Die Schutzblenden 6 sind lösbar an dem Führerhaus 3 angebracht. Zwischen einer, beispielsweise der linken, Schutzblende 6 und der ihr zugeordneten Längsrandkante 39 ist ein Vertikalabstand ausgebildet, der hier durch einen Luftspalt 61 realisiert ist.

Die Schutzblenden 6 sind in der Längsrichtung aus mehreren Schutzblendenteilen zusammengesetzt. Die Schutzblenden 6 weisen flächige Blendenabschnitte 60 auf. Die Blendenabschnitt 60 definieren eine Ebene, die gegenüber der Vertikalrichtung V mit einer Neigung α in der Querrichtung Q ausgerichtet ist. In Relation zu Längsrandkante 39 sind die Schutzblenden 6 in der Querrichtung Q nach innen aufeinander zu geneigt. Die Neigung α beträgt etwa 45°. In der Querrichtung überdecken die Blendenabschnitte 60 einen Teilbereich des Daches 43. Die Blenden 6 befinden sich in der Querrichtung Q ausschließlich in der durch das Führerhaus 3, insbesondere das Dach 43, aufgespannten Fläche. Die Schutzblenden 6 ragen in der Querrichtung Q nicht nach außen über das Führerhaus 3 insbesondere nicht über das Dach 43, hervor. Die Schutzblenden 6 haben eine vertikale Höhe oberhalb des Dachs 43. Die vertikale Höhe der Schutzblenden 6 liegt vorzugsweise im Bereich zwischen 5 cm und 50 cm, vorzugsweise im Bereich 10 cm bis 30 cm.

Die Schutzblenden 6 sind je durch eine Montagestruktur 9 mit dem Dach 43 des Führerhauses 3 verbunden. Die Montagestrukturen 9 umfassen je eine zweigleisige Schienenstruktur 91. Die Gleise oder Leisten der Schienenstruktur 91 erstrecken sich parallel zueinander in der Längsrichtung L und sind in Querrichtung Q zueinander versetzt angeordnet, wobei der Versatz vorzugsweise im Bereich 10 cm bis 30 cm liegt. Die Schutzblenden 6 haben Befestigungsbügel 63, die mit der Schienenstruktur 91 kooperieren. Die Befestigungsbügel 93 erstrecken sich im Wesentlichen horizontal in der Querrichtung Q vertikal unterhalb der Blendenabschnitte 60. Die Befestigungsbügel 63 können auf der Schienenstruktur 91 aufsitzen und mit (nicht im Detail dargestellten) Befestigungsmitteln mit der Schienenstruktur 91 gekoppelt sein. Die Befestigungsmittel haben einen Vormontagezustand, in welchem sie die Schutzblenden 6 lose an die Montagestruktur 9 koppeln, sodass die Schutzblenden 6 entlang der Montagestruktur 9 beweglich sind, also in dem hier abgebildeten Beispiel entlang der Schienenstruktur 91 in der Längsrichtung L vor- und/oder zurückfahren können. In einem Montagezustand der Befestigungsmittel realisieren sie eine ortsfeste Verbindung der Schutzblenden 6 an der Montagestruktur 9 und somit dem Führerhaus 3.Um eine besonders lange Montagestruktur zu realisieren, an der Dachaufbauten 5 und/oder Schutzblenden 6 ausgehend von den Gängen 103a, 103b einfach montierbar sind, kann die Montagestruktur 9, insbesondere die Schienenstruktur 91, mit in der Längsrichtung L über das Führerhaus 3 hervorstehende Ausläufe verfügen.

Elektrische Dachaufbauten 5, wie Antennenträger 51, können ebenfalls mittels der Montagestruktur 9 (oder alternativ einer anderen, nicht dargestellten Montagestruktur), an der Lokomotive 1 befestigt sein. Durch Anordnung der Dachaufbauten 5 auf einer Montagestruktur 9 kann deren Vertikalabstand zum Führerhausboden 41 vergrößert und dadurch ein erhöhter Schutz des Lokführers gewährleistet werden. Es kann bevorzugt sein, dass Antennenträger 51 oder andere Dachaufbauten fest, insbesondere unlösbar, mit einem Schutzblendenteil verbunden sind.

Ein Antennenträger 51 kann im Allgemeinen durch eine im Wesentlichen ebene, horizontale, flächige Tragplatte realisiert sein. Eine Tragplatte eines Antennenträgers 51 kann eine Fläche mit einer Breite und/oder Länge im Bereich von 10 cm bis 150 cm, vorzugsweise im Bereich 50 cm bis 100 cm aufweisen. Ein Antennenträger 51 umfasst eine Halterung für eine Antenne 54. Zur Montage einer Antenne 54 kann ein Antennenträger 51 zunächst mittels der Montagestruktur 9 an dem Führerhaus 3 positioniert und befestigt und sodann mit einer Antenne 54 belegt werden. Die Antennenträgern 51 sind in einem Vertikalabstand oberhalb des Dachs 43 angeordnet. Der Antennenträger-Vertikalabstand liegt vorzugsweise im Bereich von 10 cm bis 50 cm, insbesondere im Bereich 20 cm bis 30 cm. Es kann bevorzugt sein, dass der Vertikalabstand eines Antennenträgers 51 der vertikalen Höhe einer zum Antennenträger 51 benachbarten oder damit verbundenen Schutzblende 6 entspricht.

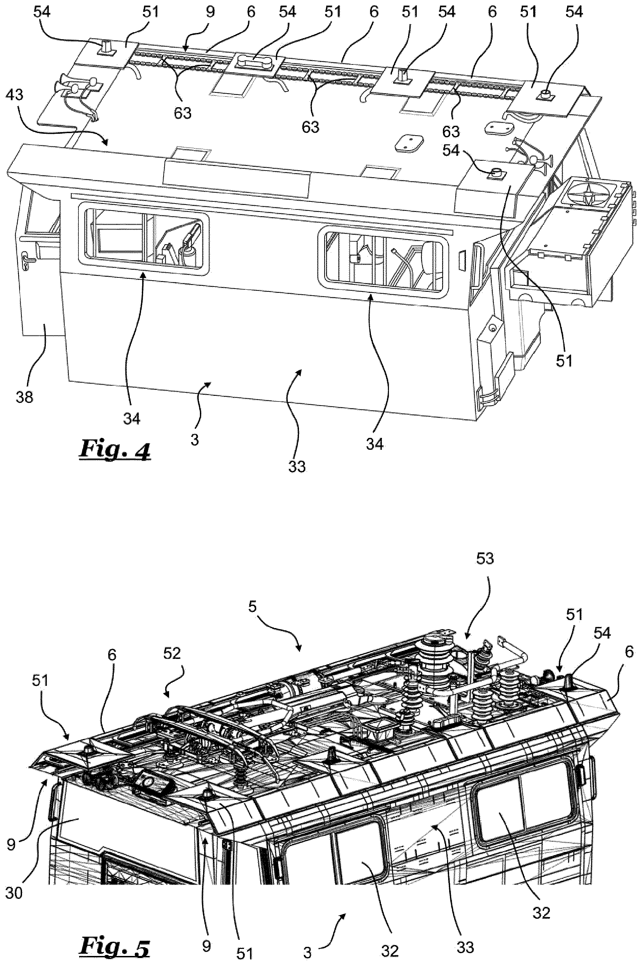

Figur 4 zeigt eine perspektivische Ansicht eines Führerhauses 3. An der in Bezug auf die Fahrtrichtung rechten oberen Längsrandkante sind mittels einer Tragstruktur 9 vier in der Längsrichtung versetzte Antennenträger 51 und drei zwischen den Antennenträgern 51 angeordnete reine Schutzblenden 6 angeordnet. An der bezüglich der Fahrtrichtung linken, oberen Längsrandkante ist eine Schutzblende 6 und nur am hinteren Ende ein einzelner Antennenträger 51 angeordnet. Die Antennenträger 51 können fest mit tragenden Schutzblendenteilen verbunden sein. Befestigungsbügel 63 verbinden die Antennenträger 51 und Schutzblendenteile mit der Tragstruktur 9. Die Tragplatten der Antennenträger 51 und die darauf angeordneten Antennen 54 befinden sich in der Querrichtung Q zwischen einerseits der rechten und andererseits der linken Schutzblende 6.

Figur 5 zeigt eine andere perspektivische Ansicht eines Führerhauses 3. In Figur 5 sind elektrische Dachaufbauten 5 in Form eines Stromabnehmers 52 und eines Hauptschalters 53 dargestellt, die sich in der Querrichtung Q zwischen der rechten und der linken Schutzblende 6 befinden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichen

- 1: Mittelführerhauslokomotive
- 3: Führerhaus
- 5: elektrische Dachaufbauten
- 6: Schutzblende
- 7: elektrischer Schaltschrank
- 8: Versenkung
- 9: Montagestruktur
- 30: Windschutzscheibe
- 31: Führerstand
- 32: Seitenfenster (rechts)
- 33: Seitenwand
- 34: Seitenfenster (links)
- 36: Sitzplatz
- 38: Einstiegstür
- 40: Stirnwand
- 41: Fußboden
- 43: Dach
- 51: Antennenträger
- 52: Stromabnehmer
- 53: Hauptschalter
- 54: Antenne
- 60: Blendenabschnitt
- 61: untere Randkante
- 69: oberes Ende
- 101: Rahmengestell
- 102a, 102b: Stoßdämpfer
- 103a: Gang (vorne)
- 103b: Gang (hinten)
- 105a, 105b: Fahrgestell
- 107: Klimaanlage
- 111: Generatormodul
- 113: Kraftstofftank
- 115: Abgasschornstein
- 121: Traktionsbatteriemodul
- 130: Umrichter
- 150: Transformator

- L: Längsrichtung
- L₁: Lokomotivlänge
- L₃: Führerhauslänge
- L_{A}: Vorderbaulänge
- L_{B}: Hinterbaulänge
- Q: Querrichtung
- V: Vertikalrichtung
- α: Neigung

## Patentansprüche

1. Mittelführerhauslokomotive (1) mit einem Führerhaus (3) und mehreren auf dem Führerhaus (3) angeordneten elektrischen Dachaufbauten (5), wobei an dem Führerhaus (3) wenigstens zwei Schutzblenden (6) zum Abschirmen von Personen im Führerhaus (3) gegenüber Elektromagnetismus von den elektrischen Dachaufbauten (5) angeordnet sind, und wobei die elektrischen Dachaufbauten (5) zwischen den wenigstens zwei Schutzblenden (6) angeordnet sind.

2. Mittelführerhauslokomotive (1) nach Anspruch 1, wobei die wenigstens zwei Schutzblenden (6) sich in der Längsrichtung (L) erstrecken relativ zur Vertikalrichtung (V) eine in der in Querrichtung (Q) orientierte Neigung (a), insbesondere von mindestens 15°, vorzugsweise mindestens 30° oder wenigstens 40°, und/oder von höchstens 75%, vorzugsweise 60° oder höchstens 50°, aufweisen.

3. Mittelführerhauslokomotive (1) nach Anspruch 1 oder 2, wobei die wenigstens zwei Schutzblenden (6) an in Querrichtung (Q) gegenüberliegenden, oberen Längsrandkanten (39) des Führerhauses (3) angeordnet sind.

4. Mittelführerhauslokomotive (1) nach einem der vorstehenden Ansprüche, wobei wenigstens eine Schutzblende (6) einen, insbesondere an ihrem in Vertikalrichtung (V) oberen Ende angeordneten, Antennenträger (51) umfasst.

5. Mittelführerhauslokomotive (1) nach einem der vorstehenden Ansprüche, wobei an dem Führerhaus (3) wenigstens eine Montagestruktur (9) zum Tragen der wenigstens einen Schutzblende (6) angeordnet ist, wobei insbesondere die Montagestruktur (9) eine Schienenstruktur (91) umfasst, an dem die wenigstens eine Schutzblende (6) lösbar befestigt ist.

6. Mittelführerhauslokomotive (1) nach Anspruch 5, wobei die Schienenstruktur (91) sich in der Längsrichtung (L) entlang der Führerhauslänge (L3) erstreckt, wobei die wenigstens eine Schutzblende (6) in einem Vormontagezustand in der Längsrichtung (L) beweglich geführt an oder in der Schienenstruktur (91) ist.

7. Mittelführerhauslokomotive (1), insbesondere nach einem der vorigen Ansprüche, mit einem Führerhaus (3) und mehreren auf dem Führerhaus (3) angeordneten elektrischen Dachaufbauten (5), wobei an dem Führerhaus (3) wenigstens eine Montagestruktur (9) zum Tragen von Dachaufbauten (5) angeordnet ist, an der wenigstens ein elektrischer Dachaufbau (5), insbesondere ein Antennenträger (51), lösbar befestigt ist.

8. Mittelführerhauslokomotive (1) nach Anspruch 7, wobei die Montagestruktur (9) eine Schienenstruktur (91) umfasst, an der wenigstens ein elektrischer Dachaufbau (5), insbesondere umfassend einen Antennenträger (51), lösbar befestigt ist.

9. Mittelführerhauslokomotive (1) nach Anspruch 8, wobei die Schienenstruktur (91) sich in der Längsrichtung (L) entlang der Führerhauslänge (L3) erstreckt, wobei die wenigstens eine Schutzblende (6) in einem Vormontagezustand in der Längsrichtung beweglich an oder in der Schienenstruktur (91) geführt ist.

10. Mittelführerhauslokomotive (1) nach einem der vorstehenden Ansprüche, wobei wenigstens ein elektrischer Dachaufbau (5) eine Antenne (54) umfasst, wie eine GSMR-Antenne, eine Antenne zur Funkfernsteuerung, eine Antenne zur Diagnose, eine Zugfunkantenne, eine Zugsicherungsantenne und/oder eine Stromverbrauchsmessantenne.

11. Mittelführerhauslokomotive (1) nach einem der vorstehenden Ansprüche, wobei wenigstens ein elektrischer Dachaufbau (5) einen Stromabnehmer (52) umfasst, insbesondere mit einem Pantografen.
